# EUROPÄISCHE PATENTSCHRIFT

(11) **EP 4 222 358 B1**
(45) Veröffentlichungstag und Bekanntmachung des Hinweises auf die Patenterteilung: **03.07.2024**
(21) Anmeldenummer: 21773744.4
(22) Anmeldetag: 08.09.2021
(51) Int. Cl.: F01N 9/00, F01N 11/00

(54) **VERFAHREN ZUR ÜBERWACHUNG EINES IN EINEM ABGASBEREICH EINER BRENNKRAFTMASCHINE ANGEORDNETEN SENSORS**
METHOD FOR MONITORING A SENSOR ARRANGED IN THE EXHAUST GAS REGION OF AN INTERNAL COMBUSTION ENGINE
PROCÉDÉ DE SURVEILLANCE D'UN CAPTEUR AGENCÉ DANS LA RÉGION DE GAZ D'ÉCHAPPEMENT D'UN MOTEUR À COMBUSTION INTERNE

(30) Priorität: 29.09.2020 DE 102020212231
(43) Veröffentlichungstag der Anmeldung: 09.08.2023
(73) Patentinhaber: Robert Bosch GmbH, 70442 Stuttgart (DE)
(72) Erfinder: ULSHOEFER, Niklas, 74343 Sachsenheim (DE); GRIMMINGER, Jens, 71229 Leonberg (DE); KAMP, Bernhard, 71732 Tamm (DE)
(86) Internationale Anmeldenummer: PCT/EP2021/074633
(87) Internationale Veröffentlichungsnummer: WO 2022/069169

(56) Entgegenhaltungen:
- EP-A1- 3 040 531
- EP-A1- 3 674 525
- WO-A1-2006/110071
- WO-A1-2015/082208
- DE-A1-102009 003 091

## Beschreibung

### Stand der Technik

Aus dem Stand der Technik sind zahlreiche Sensoren bekannt, die in einem Abgasbereich einer Brennkraftmaschine eingesetzt werden.

Die Erfindung wird im Folgenden, ohne Beschränkung weiterer Ausführungsformen und -anwendungen, insbesondere unter Bezugnahme auf Sensoren zur Detektion von Teilchen oder Partikeln, insbesondere von Rußpartikeln in einem Abgasstrom einer Brennkraftmaschine, beschrieben.

Es ist aus der Praxis bekannt, mittels zwei Elektroden, die auf einer Keramik angeordnet sind, eine Konzentration von Teilchen, wie beispielsweise Ruß- oder Staubpartikeln, in einem Abgas zu messen. Dies kann beispielsweise durch eine Messung des elektrischen Widerstands des die beiden Elektroden trennenden keramischen Werkstoffs erfolgen. Genauer wird der elektrische Strom gemessen, der beim Anlegen einer elektrischen Spannung an die Elektroden zwischen diesen fließt. Die Rußpartikel lagern sich aufgrund elektrostatischer Kräfte zwischen den Elektroden ab und bilden mit der Zeit elektrisch leitfähige Brücken zwischen den Elektroden. Je mehr dieser Brücken vorhanden sind, umso mehr steigt der gemessene Strom. Es bildet sich somit ein zunehmender Kurzschluss der Elektroden. Das Sensorelement wird vor jeder Messung regeneriert, in dem es durch ein integriertes Heizelement auf mindestens 700°C gebracht wird, wodurch die Rußablagerungen wegbrennen.

Derartige Sensoren arbeiten somit nach dem Prinzip der resistiven Messung einer über einen längeren Messzeitraum auf einem Sensorelement angereicherten Rußmasse. Derartige Sensoren werden beispielsweise in einem Abgasstrang einer Brennkraftmaschine, wie beispielsweise einem Verbrennungsmotor der Dieselbauart eingesetzt. Üblicherweise befinden sich diese Sensoren stromabwärts des Auslassventils bzw. des Rußpartikelfilters und dienen zur Überwachung des Rußpartikelfilters.

Bei Abgassensoren, wie beispielsweise Partikelsensoren, muss überwacht werden, ob diese wie vorgesehen im Abgasstrang verbaut sind. Dies kann über folgende Diagnosen erreicht werden: Eine Ausbauerkennung über Messung der Temperatur des Sensorelements. Falls eine modellierte Mindesttemperatur des Abgasstrangs erreicht wird und die Temperatur des Sensorelements einen Schwellwert unterschreitet, wird auf Ausbau erkannt. Dies geschieht dann, wenn das Sensorelement nicht beheizt wird, d.h. in der Messphase. Alternativ erfolgt eine Schutzrohrdiagnose. Wenn bei Änderungen der Abgasströmungsgeschwindigkeit keine oder eine zu geringe Änderung der Heizleistung zum Einregeln einer konstanten Sensorelementtemperatur resultiert, wird auf Ausbau oder verstopftes Schutzrohr erkannt. Die Applikation dieser Diagnose ist aufwendig.

Aus der DE 10 2009 003 091 A1 sind ein Verfahren und eine Vorrichtung zur Überwachung eines in einem Abgasbereich einer Brennkraftmaschine angeordneten Bauteils bekannt.

Trotz der zahlreichen Vorteile der aus dem Stand der Technik bekannten Vorrichtungen und Verfahren zur Überwachung eines in einem Abgasbereich einer Brennkraftmaschine angeordneten Sensors beinhalten diese noch Verbesserungspotenzial. So kann durch die Toleranzen der Modelltemperatur des Abgasstrangs und der Sensortemperatur die Ausbauerkennung nur bei ausreichend hohem Abstand von Modell- und Sensortemperatur, d.h. also bei genügend hohen Modelltemperaturen freigegeben werden. Dies führt bei Fahrzeugen, bei denen der Partikelsensor an einer vergleichsweise kühlen Position eingebaut ist, zu Schwierigkeiten hinsichtlich der Freigabehäufigkeit der Diagnose.

### Offenbarung der Erfindung

Es wird daher ein Verfahren und eine Vorrichtung zur Überwachung eines in einem Abgasbereich einer Brennkraftmaschine angeordneten Sensors vorgeschlagen, welche die Nachteile bekannter Überwachungsverfahren zumindest weitgehend vermeiden und die insbesondere eine Auswertung für die Erkennung eines ausgebauten Sensors schaffen, die auf der Auswertung von Temperaturänderungen beruht, und nicht vom absoluten Temperaturwert abhängt, so dass die Diagnose bei tieferen Temperaturen im Vergleich zum im Stand der Technik beschriebenen Verfahren freigegeben werden kann.

Im Rahmen der vorliegenden Offenbarung werden die Begriffe "erster", "zweiter", "dritter", "vierter" und dergleichen lediglich zur Unterscheidung bestimmter Merkmale oder Bauteile verwendet und sollen keine bestimmte Reihenfolge, wie beispielsweise eine Gewichtung, angeben.

In einem ersten Aspekt der Erfindung wird ein Verfahren zur Überwachung eines in einem Abgasbereich einer Brennkraftmaschine angeordneten Sensors vorgeschlagen. Das Verfahren umfasst Bestimmen einer Sensortemperatur mittels des Sensors. Die Sensortemperatur kann dabei direkt oder indirekt mittels des Sensors bestimmt werden.

Das Verfahren umfasst weiterhin Bestimmen einer Modelltemperatur des Sensors. Die Modelltemperatur approximiert eine Temperatur an einem Einbauort des Sensors. Mit anderen Worten wird für die Modelltemperatur eine Temperatur betrachtet, die möglichst genau die vom Sensor gemessene Temperatur an der Stelle des eingebauten Sensors widerspiegeln soll. Die Modelltemperatur kann dabei mittels realer oder modellierter Temperaturquellen gebildet werden. In der Praxis wird ein gewichtetes Mittel (kalibrierbar) aus Abgastemperatur und Wandtemperatur am Sensoreinbauort als Modelltemperatur für den Sensor verwendet. Für die Abgas- und Wandtemperatur können reale Temperatursensoren verwendet werden, falls an geeigneten Stellen im (Fahrzeug)-Abgastrakt welche verfügbar sind, oder die Abgas- und Wandtemperaturen werden modelliert.

Das Verfahren umfasst weiterhin Integrieren von Änderungen der Sensortemperatur und Integrieren von Änderungen der Modelltemperatur, falls die Änderungen der Sensortemperatur einen vorbestimmten ersten Schwellwert überschreiten und die Änderungen der Modelltemperatur einen vorbestimmten zweiten Schwellwert überschreiten. Entsprechend erfolgt das Integrieren der Temperaturänderungen nur bei Überschreiten der jeweiligen Schwellwerte. Das Verfahren umfasst weiterhin Vergleichen des Integrals der Änderungen der Sensortemperatur mit einem vorbestimmten vierten Schwellwert. Bei den Änderungen der Sensortemperatur und der Modelltemperatur handelt es sich bevorzugt um Temperaturanstiege.

Die Auswertemethode nutzt die Tatsache aus, dass bei einem ausgebauten Sensor die Sensortemperatur keine wesentlichen Anstiege aufweist. Ein eingebauter Sensor hingegen folgt in einem gewissen Rahmen der Modelltemperatur des Abgassystems. Die Methode beruht auf einer Korrelation der Temperaturanstiege von Modelltemperatur des Abgassystems und Sensortemperatur. Die Korrelation wird realisiert, indem die Temperaturanstiege von Modell- und Sensortemperatur jeweils aufintegriert werden, wenn die Anstiege eine definierbare Schwelle überschreiten. Durch geeignete Wahl der Integrationsschwellen können Signalrauschen und nicht relevante Temperaturanstiege ignoriert werden. Wird eine unzureichende Übereinstimmung beobachtet, kann ein Diagnosefehler gesetzt und somit ein Sensorausbau erkannt werden.

Der Begriff "Integral", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf einen Oberbegriff für das unbestimmte und das bestimmte Integral beziehen. Die Berechnung von Integralen heißt Integration. Das bestimmte Integral einer Funktion ordnet dieser eine Zahl zu. Bildet man das bestimmte Integral einer reellen Funktion in einer Variablen, so lässt sich das Ergebnis im zweidimensionalen Koordinatensystem als Flächeninhalt der Fläche, die zwischen dem Graphen der Funktion, der x-Achse sowie den begrenzenden Parallelen zur y-Achse liegt, deuten. Hierbei zählen Flächenstücke unterhalb der x-Achse negativ. Man spricht vom orientierten Flächeninhalt (auch Flächenbilanz). Diese Konvention wird gewählt, damit das bestimmte Integral eine lineare Abbildung ist, was sowohl für theoretische Überlegungen als auch für konkrete Berechnungen eine zentrale Eigenschaft des Integralbegriffs darstellt. Auch wird so sichergestellt, dass der sogenannte Hauptsatz der Differential- und Integralrechnung gilt. Das unbestimmte Integral einer Funktion ordnet dieser eine Menge von Funktionen zu, deren Elemente Stammfunktionen genannt werden. Diese zeichnen sich dadurch aus, dass ihre ersten Ableitungen mit der Funktion, die integriert wurde, übereinstimmen. Der Hauptsatz der Differential- und Integralrechnung gibt Auskunft darüber, wie bestimmte Integrale aus Stammfunktionen berechnet werden können.

Das Verfahren kann weiterhin Vergleichen des Integrals der Änderungen der Sensortemperatur mit dem vorbestimmten vierten Schwellwert, falls das Integral der Änderungen der Modelltemperatur einen vorbestimmten dritten Schwellwert überschreitet, umfassen. Somit erfolgt die Auswertung, falls man ausreichend Temperaturanstiege betrachtet hat, d.h. das Integral der positiven Modelltemperaturänderungen einen kalibrierbaren Schwellwert erreicht.

Das Bestimmen der Modelltemperatur kann zumindest auf einer Abgastemperatur und/oder einer Wandtemperatur des Abgasbereichs an einem Einbauort des Sensors basieren.

Das Verfahren kann weiterhin Tiefpassfiltern der Sensortemperatur und/oder der Modelltemperatur umfassen. Zur Signalglättung können entsprechend Sensor- und/oder Modelltemperatur tiefpassgefiltert werden. Der Begriff "Tiefpassfiltern", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf Filtern mittels eines Tiefpasses beziehen. Als Tiefpass bezeichnet man in der Elektronik solche Filter, die Signalanteile mit Frequenzen unterhalb ihrer Grenzfrequenz annähernd ungeschwächt passieren lassen, Anteile mit höheren Frequenzen dagegen dämpfen. In der Nachrichtentechnik ist die Grenzfrequenz derjenige Wert der Frequenz, bei dessen Überschreitung die Signalamplitude (Spannung) oder die Modulationsamplitude am Ausgang eines Bauteils unter einen bestimmten Wert sinkt.

Das Verfahren kann weiterhin Bilden von einem Sensortemperaturquotienten und/oder von einem Modelltemperaturquotienten mit einem vorbestimmten Zeitschritt umfassen. Um Temperaturänderungen betrachten zu können, werden entsprechend die Differenzenquotienten beider Temperaturen mit einem wählbaren Zeitschritt dt gebildet.

Das Verfahren umfasst weiterhin Feststellen eines Ausbaus und/oder nicht funktionsgerechten Einbaus des Sensors, falls das Integral der Änderungen der Sensortemperatur den vorbestimmten vierten Schwellwert unterschreitet, und Feststellen eines Einbaus und/oder funktionsgerechten Einbaus des Sensors, falls das Integral der Änderungen der Sensortemperatur den vorbestimmten vierten Schwellwert erreicht oder überschreitet. Ein Fehler, d.h. ein Sensorausbau, wird somit erkannt, wenn zu diesem Zeitpunkt das Integral der positiven Sensortemperaturänderungen kleiner als eine kalibrierbare Schwelle ist, ansonsten wird ein Intaktergebnis gemeldet.

Der Sensor kann ein Partikelsensor sein.

Der Begriff "Partikelsensor", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann sich, ohne Beschränkung, insbesondere auf einen Sensor beziehen, der zur Erfassung von Teilchen oder Partikeln eingerichtet ist. Bei den Teilchen handelt es sich bevorzugt um elektrisch leitfähige Teilchen. Das Funktionsprinzip des Partikelsensors beruht auf der Messung des Widerstands. Rußpartikel lagern sich auf einer Elektrodenstruktur ab und bilden zwischen den Elektroden leitfähige Rußpfade. Vor jeder Messphase wird das Sensorelement durch Aufheizen regeneriert, um zu Beginn des Messvorgangs einen definierten Zustand des Sensorelements zu erhalten.

Die Brennkraftmaschine kann ein Dieselmotor sein, wobei das Verfahren im Rahmen einer On-Board-Diagnose des Dieselmotors durchgeführt werden kann.

In einem weiteren Aspekt wird eine Vorrichtung zur Überwachung eines in einem Abgasbereich einer Brennkraftmaschine angeordneten Sensors vorgeschlagen. Die Vorrichtung umfasst eine Steuerung, wobei die Steuerung zum Durchführen des Verfahrens nach einer der vorhergehenden Ausführungen eingerichtet ist. Die Steuerung kann in einem Steuergerät implementiert sein, wie beispielsweise in einem Motorsteuergerät.

In einem weiteren Aspekt wird ein Computerprogramm vorgeschlagen, welches eingerichtet ist, jeden Schritt des Verfahrens nach einer der vorhergehenden Ausführungen durchzuführen.

In einem weiteren Aspekt wird ein elektronisches Speichermedium vorgeschlagen, auf welchem ein solches Computerprogramm gespeichert ist.

In einem weiteren Aspekt wird ein elektronisches Steuergerät vorgeschlagen, welches ein solches elektronisches Speichermedium umfasst.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
Figur 1 das technische Umfeld, in der das erfindungsgemäße Verfahren angewendet werden kann,
Figur 2 schematisch das Sensorelement eines als Partikelsensor ausgeführten Sensors in der Draufsicht,
Figur 3 ein Ablaufdiagramm des erfindungsgemäßen Verfahrens,
Figur 4 Beispielverläufe der Temperaturen und Integrale der positiven Temperaturänderungen im Intaktfall, und
Figur 5 Beispielverläufe der Temperaturen und Integrale der positiven Temperaturänderungen im Defektfall.

### Ausführungsformen der Erfindung

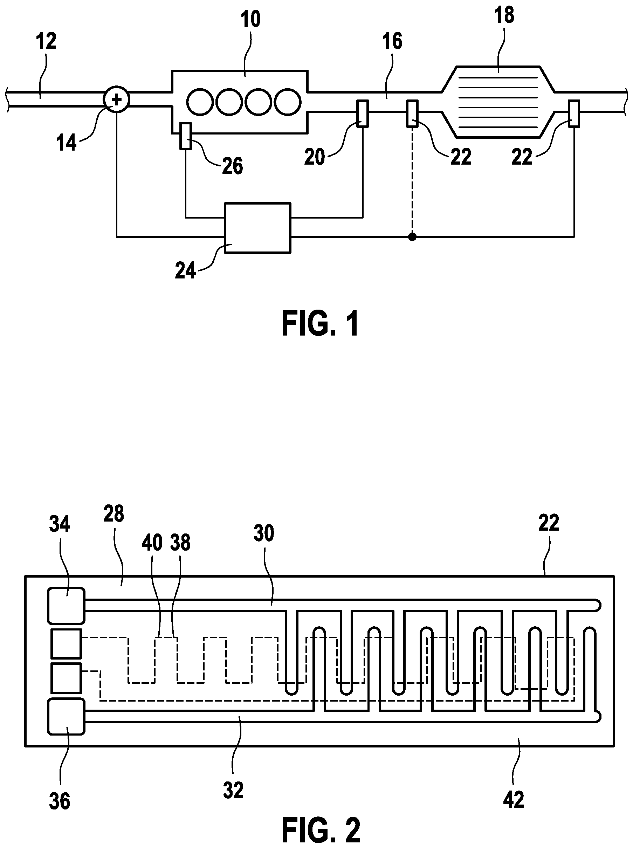

Figur 1 zeigt das technische Umfeld, in der das erfindungsgemäße Verfahren angewendet werden kann. Das technische Umfeld kann weiterhin auch Abgasnachbehandlungseinrichtungen umfassen, die Maßnahmen zur Minderung mindestens einer weiteren gesetzlich limitierten Komponente enthalten, wie z. B. NOx-Minderungsmaßnahmen.

Eine Brennkraftmaschine 10, die als Dieselmotor ausgeführt sein kann, bekommt Verbrennungsluft über eine Luftzuführung 12 zugeführt. Dabei kann die Luftmenge der Verbrennungsluft mittels eines Luftmassenmessers 14 in der Luftzuführung 12 bestimmt werden. Die Luftmenge kann bei einer Korrektur einer Anlagerungswahrscheinlichkeit von im Abgas der Brennkraftmaschine 10 vorhandenen Partikeln verwendet werden. Das Abgas der Brennkraftmaschine 10 wird über einen Abgasstrang 16 abgeführt, in dem eine Abgasreinigungsanlage 18 angeordnet ist. Diese Abgasreinigungsanlage 18 kann als Diesel-Partikelfilter ausgeführt sein bzw. aufweisen. Weiterhin sind im gezeigten Beispiel im Abgasstrang 16 eine als Lambdasonde ausgeführte Abgassonde 20 und ein als Partikelsensor ausgeführter Sensor 22 angeordnet, deren Signale einer Motorsteuerung 24 zugeführt werden. Der Sensor 22 ist in Strömungsrichtung des Abgases gesehen hinter der Abgasreinigungsanlage 18 angeordnet. Die Motorsteuerung 24 ist weiterhin mit dem Luftmassenmesser 14 verbunden und bestimmt auf Basis der ihr zugeführten Daten eine Kraftstoffmenge, die über eine Kraftstoff-Dosierung 26 der Brennkraftmaschine 10 zugeführt werden kann. Der Sensor 22 oder ein zusätzlicher Sensor 22 kann dabei auch in Strömungsrichtung des Abgases vor der Abgasreinigungsanlage 18 angeordnet sein. Mit den gezeigten Vorrichtungen ist eine Beobachtung des Partikelausstoßes der Brennkraftmaschine 10 (On-Board-Diagnose) und eine Prognose der Beladung bzw. eine Feststellung eines Defekts der als Diesel-Partikelfilter (DPF) ausgebildeten Abgasreinigungsanlage 18 möglich.

Fig. 2 zeigt in einer schematischen Darstellung eines Sensorelements eines als Partikelsensor ausgeführten Sensors 22 in der Draufsicht. Auf einem isolierenden Träger 28, beispielsweise hergestellt aus Aluminiumoxid, sind eine erste Elektrode 30 und eine zweite Elektrode 32 aufgebracht. Die Elektroden 30, 32 sind in Form zweier interdigitaler, ineinandergreifender Kammelektroden ausgeführt. An den stirnseitigen Enden der Elektroden 30, 32 sind ein erster Anschluss 34 und ein zweiter Anschluss 36 vorgesehen, über welche die Elektroden 30, 32 zur Spannungsversorgung und zur Durchführung der Messung mit einer nicht dargestellten Steuereinheit verbunden werden können. Zusätzlich weist der Sensor 20 einen Temperatursensor 38 auf, mit dem eine Sensortemperatur direkt bestimmt werden kann. Der Temperatursensor 38 kann in Form eines Platinmäanders ausgeführt sein, wobei über zusätzliche Elektroden ein temperaturabhängiger Widerstand bestimmt und innerhalb der Motorsteuerung 24 auswertbar ist.

Der Sensor 22 weist weiterhin ein Heizelement 40, welches in dem Träger 28 integriert ist, sowie eine optionale Schutzschicht 42 auf. Dabei kann vorgesehen sein, dass das Heizelement 40 gleichzeitig als Temperatursensor 38 ausgeführt ist oder dass das Heizelement 40 und der Temperatursensor 38 als separate elektrische Leiter mit separaten Elektroden ausgeführt sind.

Die Funktionsweise derartiger Partikelsensoren ist in der Literatur bereits hinreichend beschrieben und soll daher im Folgenden nur kurz beschrieben werden.

Wird ein solcher Sensor 22 in einem Partikel führenden Gasstrom, beispielsweise in einem Abgaskanal eines Dieselmotors, betrieben, so lagern sich Partikel aus dem Gasstrom an dem Sensor 22 ab. Im Falle des Dieselmotors handelt es sich bei den Partikeln insbesondere um Rußpartikel mit einer entsprechenden elektrischen Leitfähigkeit. Dabei hängt die Ablagerungsrate der Partikel an dem Sensor 22 neben der Partikelkonzentration in dem Abgas unter anderem auch von der Spannung ab, welche an den Elektroden 30, 32 anliegt. Durch die anliegende Spannung wird ein elektrisches Feld erzeugt, welches auf elektrisch geladene Partikel und auf Partikel mit einer Dipol-Ladung eine entsprechende Anziehung ausübt. Durch geeignete Wahl der an den Elektroden 30, 32 anliegenden Spannung kann daher die Ablagerungsrate der Partikel beeinflusst werden.

In dem Ausführungsbeispiel sind zumindest die Zuleitungsabschnitte der Elektroden 30, 32 und der Träger 28 elektrodenseitig mit der optionalen Schutzschicht 42 überzogen. Die optionale Schutzschicht 42 schützt die Elektroden 30, 32 bei den zumeist vorherrschenden hohen Betriebstemperaturen des Sensors 22 vor Korrosion. Sie ist in dem vorliegenden Ausführungsbeispiel aus einem Material mit einer geringen Leitfähigkeit hergestellt, kann jedoch auch aus einem Isolator gefertigt sein.

Auf der Schutzschicht 42 haben sich Partikel aus dem Gasstrom nach einer bestimmten Zeit in Form einer Schicht abgelagert. Durch die gering leitfähige Schutzschicht 42 bilden die Partikel einen leitfähigen Pfad zwischen den Elektroden 30, 32, so dass sich, abhängig von der Menge der abgelagerten Partikel, eine Widerstandsänderung zwischen den Elektroden 30, 32 ergibt. Diese kann zum Beispiel gemessen werden, in dem eine konstante Spannung an die Anschlüsse 34, 36 der Elektroden 30, 32 angelegt und die Änderung des Stromes durch die angelagerten Partikel bestimmt wird.

Ist die Schutzschicht 42 isolierend aufgebaut, führen die abgelagerten Partikel zu einer Änderung des ohmschen Widerstandes des Sensors 22, was durch eine entsprechende Messung, bevorzugt mit einer Gleichspannung, ausgewertet werden kann.

Das erfindungsgemäße Diagnoseverfahren wird nachstehend ausführlicher beschrieben. Die Funktionalität des erfindungsgemäßen Verfahrens mit den oben oder nachstehend beschriebenen Varianten kann dabei besonders vorteilhaft als Software in der Motorsteuerung 24 der Brennkraftmaschine 10, bei DieselBrennkraftmaschinen in der elektronischen Dieselregelung EDC (Electronic Diesel Control) implementiert sein. Entsprechend kann die Motorsteuerung 24 durch seine Steuerung als Vorrichtung bzw. Steuergerät genutzt werden, um das Verfahren durchzuführen. Beispielsweise wird das Verfahren im Rahmen einer On-Board-Diagnose des Dieselmotors durchgeführt.

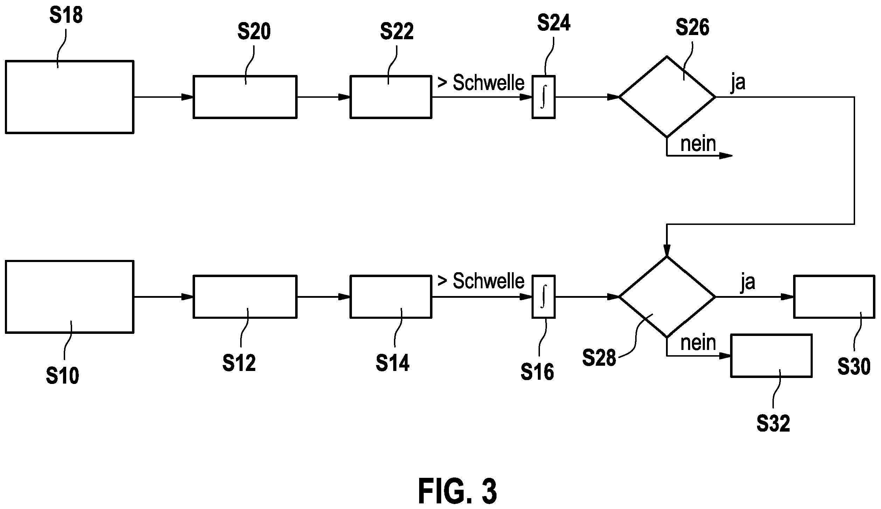

Figur 3 zeigt ein Ablaufdiagramm des erfindungsgemäßen Verfahrens. Das erfindungsgemäße Verfahren sieht in Schritt S10 vor, dass mit dem Sensor 22 eine Sensortemperatur bestimmt wird. Die Sensortemperatur kann direkt oder indirekt bestimmt werden. In einem nachfolgenden Schritt S12 wird die Sensortemperatur tiefpassgefiltert. Weiterhin werden Temperaturänderungen und insbesondere Temperaturanstiege der Sensortemperatur erfasst. Um Temperaturänderungen betrachten zu können, wird in einem nachfolgenden Schritt S14 ein Differenzenquotient der Sensortemperatur mit einem vorbestimmten Zeitschritt dt gebildet. Falls die Änderungen der Sensortemperatur einen vorbestimmten ersten Schwellwert überschreiten, erfolgt in Schritt S16 ein Integrieren der Änderungen der Sensortemperatur. Der erste Schwellwert wird so gewählt, dass Änderungen aufgrund von Signalrauschen ausgeblendet werden. Geringe Änderungen, für die sich kein entsprechendes Pendant in den Änderungen einer Modelltemperatur des Sensors 22 finden lässt, werden nicht berücksichtigt. Hierbei liegt der Fokus nicht auf einem Vergleich von Temperaturänderungen innerhalb eines einzelnen Zeitschrittes, sondern innerhalb eines größeren Zeitraums von beispielsweise mehreren Sekunden.

Parallel zu den Schritten S10 bis S16 sieht das Verfahren in Schritt S18 vor, dass die Modelltemperatur des Sensors 22 bestimmt wird. Die Modelltemperatur kann beispielsweise mittels eines weiteren Sensors bestimmt werden. Die Modelltemperatur basiert zumindest auf einer Abgastemperatur und/oder einer Wandtemperatur des Abgasbereichs an einem Einbauort des Sensors. In einem nachfolgenden Schritt S20 wird die Modelltemperatur tiefpassgefiltert. Weiterhin werden Temperaturänderungen und insbesondere Temperaturanstiege der Modelltemperatur erfasst. Um Temperaturänderungen betrachten zu können, wird in einem nachfolgenden Schritt S22 ein Differenzenquotient der Modelltemperatur mit einem vorbestimmten Zeitschritt dt gebildet. Falls die Änderungen der Modelltemperatur einen vorbestimmten zweiten Schwellwert überschreiten, erfolgt in Schritt S24 ein Integrieren der Änderungen der Modelltemperatur. Der zweite Schwellwert wird so gewählt, dass Änderungen aufgrund von Signalrauschen ausgeblendet werden. Es werden dabei nur solche Modelltemperaturanstiege berücksichtigt, für die auch eine entsprechende Reaktion der Sensortemperatur beobachtet werden kann. Hierbei liegt der Fokus nicht auf einem Vergleich von Temperaturänderungen innerhalb eines einzelnen Zeitschrittes, sondern innerhalb eines größeren Zeitraums von beispielsweise mehreren Sekunden.

Falls in einem nachfolgenden Schritt S26 das Integral der Änderungen der Modelltemperatur einen vorbestimmten dritten Schwellwert überschreitet, erfolgt in einem Schritt S28 Vergleichen des Integrals der Änderungen der Sensortemperatur mit einem vorbestimmten vierten Schwellwert. Ansonsten endet das Verfahren nach Schritt S26. Falls in Schritt S28 das Integral der Änderungen der Sensortemperatur den vorbestimmten vierten Schwellwert unterschreitet, wird in Schritt S30 ein Ausbau und/oder nicht funktionsgerechter Einbau des Sensors 22 festgestellt. Falls in Schritt S28 das Integral der Änderungen der Sensortemperatur den vorbestimmten vierten Schwellwert erreicht oder überschreitet, wird in Schritt S32 ein Einbau und/oder funktionsgerechter Einbau des Sensors 22 festgestellt.

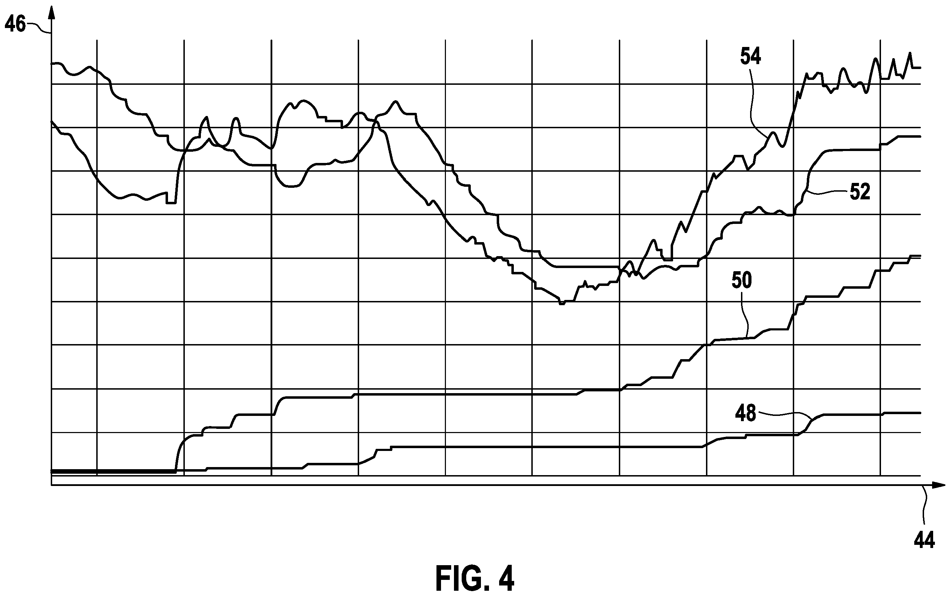

Figur 4 zeigt Beispielverläufe der Temperaturen und Integrale der positiven Temperaturänderungen im Intaktfall. Auf der X-Achse 44 ist die Zeit aufgetragen. Auf der Y-Achse 46 sind die Sensortemperatur, die Modelltemperatur, das Integral der positiven Sensortemperaturänderungen und das Integral der positiven Modelltemperaturänderungen dargestellt. Die Kurve 48 stellt den Verlauf der Sensortemperatur dar. Die Kurve 50 stellt den Verlauf der Modelltemperatur für den Sensor dar. Die Kurve 52 stellt den Verlauf des Integrals der positiven Sensortemperaturänderungen dar. Die Kurve 54 stellt den Verlauf des Integrals der positiven Modelltemperaturänderungen dar. Wie aus Figur 4 zu erkennen ist, folgt bei einem intakten Sensor 22 die Sensortemperatur der Modelltemperatur, so dass die Kurven 52 und 54 einen ähnlichen Verlauf der jeweiligen Integrale haben.

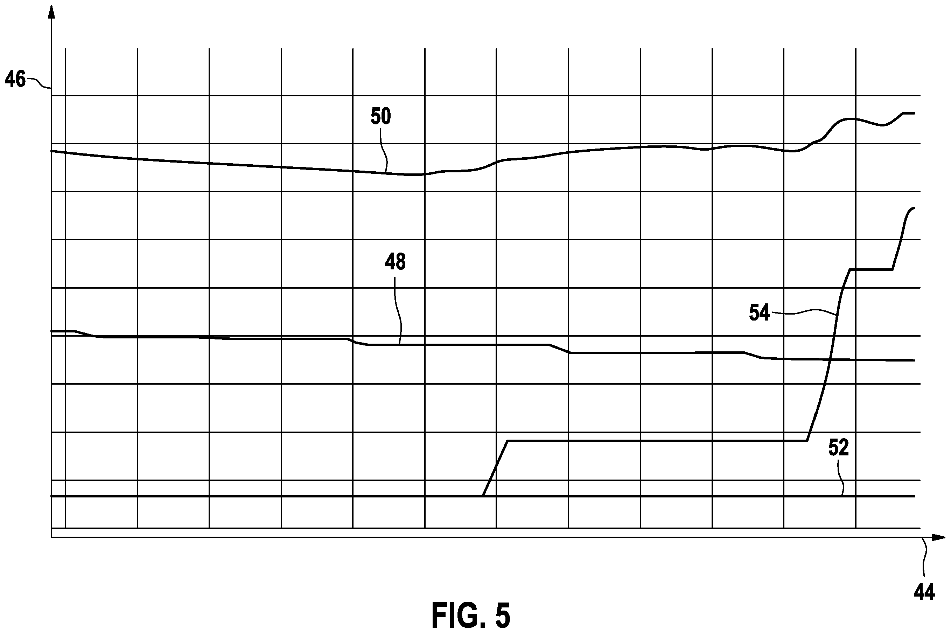

Figur 5 zeigt Beispielverläufe der Temperaturen und Integrale der positiven Temperaturänderungen im Defektfall. Nachstehend werden lediglich die Unterschiede zu Figur 4 erläutert und gleiche oder vergleichbare Merkmale sind mit gleichen Bezugszeichen versehen. Wie aus Figur 5 zu erkennen ist, folgt bei einem defekten Sensor 22 die Sensortemperatur der Modelltemperatur nicht. So bleibt bei einem Anstieg der Modelltemperatur die Sensortemperatur annährend konstant wie anhand der Kurven 48 und 50 zu erkennen ist. Entsprechend steigt die Kurve 54 an, nicht jedoch die Kurve 52.

Ein weiterer Vorteil dieser Auswertemethode liegt in der Erwartung einer hohen Trennschärfe, da das Integral der Sensortemperaturänderungen im Defektfall nicht oder nur geringfügig ansteigen wird. Die Defektschwelle kann somit sehr niedrig angesetzt werden, was auch eine Auswertung nach vergleichsweise wenig Modelltemperaturanstiegen ermöglicht. Ein Sensortemperaturanstieg im Defektfall kann im Ausnahmefall durch den Einfluss von Stauwärme verursacht werden, wenn das Fahrzeug beispielsweise direkt nach einer Fahrt mit hoher Motorlast in der Garage abgestellt wird. Der Temperaturanstieg in solch einem Szenario wird aber erstens gering und zweitens vergleichsweise langsam sein, so dass eine Integration solcher Anstiege durch eine geeignete Wahl der Integrationsschwelle verhindert werden kann.

Die in dieser Erfindung ausgeführte Auswertemethode nutzt Temperaturänderungen aus, bedingt also eine vergleichsweise dynamische Fahrweise. Die derzeit genutzten Methoden setzen eher statische Bedingungen mit geringen Änderungen der Modelltemperatur voraus. Die Auswertemethoden decken also komplementäre Fahrbedingungen ab, weshalb sie vorteilhafterweise beide gleichzeitig zur Erkennung eines ausgebauten Sensors benutzt werden können. In diesem Fall kann die Methode, die zuerst zu einem Diagnoseergebnis kommt, das Setzen des Fehlers auslösen. Denkbar ist auch die ausschließliche Nutzung der beschriebenen neuen Auswertemethode.

Der Einsatz dieser Erfindung kann durch eine Analyse der entsprechenden Software nachgewiesen werden. Auch an der Art und Weise, wie eine entsprechende Diagnose auf Sensorausbau zu applizieren ist, könnte die Erfindung nachgewiesen werden. Weiterhin wäre ein Nachweis möglich, wenn einen Sensor mit einem erfindungsgemäßen Steuergerät und entsprechender Software betrieben wird.

## Patentansprüche

1. Verfahren zur Überwachung eines in einem Abgasbereich einer Brennkraftmaschine (10) angeordneten Sensors (22), umfassend,
- Bestimmen einer Sensortemperatur mittels des Sensors (22),
- Bestimmen einer Modelltemperatur des Sensors (22),
- Integrieren von Änderungen der Sensortemperatur und Integrieren von Änderungen der Modelltemperatur, falls die Änderungen der Sensortemperatur einen vorbestimmten ersten Schwellwert überschreiten und die Änderungen der Modelltemperatur einen vorbestimmten zweiten Schwellwert überschreiten,
- Vergleichen des Integrals der Änderungen der Sensortemperatur mit einem vorbestimmten vierten Schwellwert und weiterhin umfassend:
- Feststellen eines Ausbaus und/oder nicht funktionsgerechten Einbaus des Sensors (22), falls das Integral der Änderungen der Sensortemperatur den vorbestimmten vierten Schwellwert unterschreitet, und Feststellen eines Einbaus und/oder funktionsgerechten Einbaus des Sensors (22), falls das Integral der Änderungen der Sensortemperatur den vorbestimmten vierten Schwellwert erreicht oder überschreitet.

2. Verfahren nach dem vorhergehenden Anspruch, weiterhin umfassend Vergleichen des Integrals der Änderungen der Sensortemperatur mit dem vorbestimmten vierten Schwellwert, falls das Integral der Änderungen der Modelltemperatur einen vorbestimmten dritten Schwellwert überschreitet.

3. Verfahren nach einem der vorhergehenden Ansprüche, wobei das Bestimmen der Modelltemperatur zumindest auf einer Abgastemperatur und/oder einer Wandtemperatur des Abgasbereichs an einem Einbauort des Sensors (22) basiert.

4. Verfahren nach einem der vorhergehenden Ansprüche, weiterhin umfassend Tiefpassfiltern der Sensortemperatur und/oder der Modelltemperatur.

5. Verfahren nach einem der vorhergehenden Ansprüche, weiterhin umfassend Bilden von einem Sensortemperaturquotienten und/oder von einem Modelltemperaturquotienten mit einem vorbestimmten Zeitschritt.

6. Verfahren nach einem der vorhergehenden Ansprüche, wobei der Sensor (22) ein Partikelsensor ist.

7. Verfahren nach einem der vorhergehenden Ansprüche, wobei die Brennkraftmaschine (10) ein Dieselmotor ist, wobei das Verfahren im Rahmen einer On-Board-Diagnose des Dieselmotors durchgeführt wird.

8. Vorrichtung (24) zur Überwachung einer in einem Abgasbereich eines Brennkraftmaschine (10) angeordneten Sensors (10), wobei die Vorrichtung eine Steuerung umfasst, wobei die Steuerung zum Durchführen des Verfahrens nach einem der vorhergehenden Ansprüche eingerichtet ist.

9. Computerprogramm, welches eingerichtet ist, jeden Schritt des Verfahrens nach einem der Ansprüche 1 bis 7 durchzuführen.

10. Elektronisches Speichermedium, auf welchem ein Computerprogramm nach dem vorhergehenden Anspruch gespeichert ist.

11. Elektronisches Steuergerät (24), welches ein elektronisches Speichermedium nach dem vorhergehenden Anspruch umfasst.

## Claims

1. Method for monitoring a sensor (22) arranged in the exhaust gas region of an internal combustion engine (10), comprising
- determining a sensor temperature using the sensor (22),
- determining a model temperature of the sensor (22),
- integrating changes in the sensor temperature and integrating changes in the model temperature if the changes in the sensor temperature exceed a predetermined first threshold value and the changes in the model temperature exceed a predetermined second threshold value,
- comparing the integral of the changes in the sensor temperature with a predetermined fourth threshold value, and further comprising:
- establishing removal and/or functionally incorrect installation of the sensor (22) if the integral of the changes in the sensor temperature falls below the predetermined fourth threshold value, and establishing installation and/or functionally incorrect installation of the sensor (22) if the integral of the changes in the sensor temperature reaches or exceeds the predetermined fourth threshold value.

2. Method according to the preceding claim, further comprising comparing the integral of the changes in the sensor temperature with the predetermined fourth threshold value if the integral of the changes in the model temperature exceeds a predetermined third threshold value.

3. Method according to either of the preceding claims, wherein determining the model temperature is based at least on an exhaust gas temperature and/or a wall temperature of the exhaust gas region at an installation site of the sensor (22).

4. Method according to any of the preceding claims, further comprising low-pass filtering the sensor temperature and/or the model temperature.

5. Method according to any of the preceding claims, further comprising forming a sensor temperature quotient and/or a model temperature quotient with a predetermined time step.

6. Method according to any of the preceding claims, wherein the sensor (22) is a particle sensor.

7. Method according to any of the preceding claims, wherein the internal combustion engine (10) is a diesel engine, wherein the method is carried out as part of on-board diagnosis of the diesel engine.

8. Device (24) for monitoring a sensor (10) arranged in an exhaust gas region of an internal combustion engine (10), wherein the device comprises a controller, wherein the controller is configured to carry out the method according to any of the preceding claims.

9. Computer program which is configured to carry out each step of the method according to any of Claims 1 to 7.

10. Electronic storage medium, on which a computer program according to the preceding claim is stored.

11. Electronic control device (24), which comprises an electronic storage medium according to the preceding claim.

## Revendications

1. Procédé de surveillance d'un capteur (22) agencé dans une zone de gaz d'échappement d'un moteur à combustion interne (10), comprenant les étapes suivantes,
- déterminer une température de capteur au moyen du capteur (22),
- déterminer une température modèle du capteur (22),
- intégrer les variations de la température du capteur et intégrer les variations de la température modèle si les variations de la température du capteur dépassent une première valeur de seuil prédéterminée et si les variations de la température modèle dépassent une deuxième valeur de seuil prédéterminée,
- comparer l'intégrale des variations de la température du capteur à une quatrième valeur de seuil prédéterminée et comprenant en outre :
- détecter un démontage et/ou un montage incorrect du capteur (22) si l'intégrale des variations de la température du capteur tombe en dessous de la quatrième valeur de seuil prédéterminée, et déterminer un montage et/ou un montage correct du capteur (22) si l'intégrale des variations de la température du capteur atteint ou dépasse la quatrième valeur de seuil prédéterminée.

2. Procédé selon la revendication précédente, comprenant en outre la comparaison de l'intégrale des variations de la température du capteur avec le quatrième seuil prédéterminée si l'intégrale des variations de la température modèle dépasse une troisième valeur de seuil prédéterminée.

3. Procédé selon l'une des revendications précédentes, dans lequel la détermination de la température modèle est basée sur au moins une température de gaz d'échappement et/ou une température de paroi de la zone de gaz d'échappement à un emplacement de montage du capteur (22) .

4. Procédé selon l'une des revendications précédentes, comprenant en outre des filtres passe-bas de la température du capteur et/ou de la température modèle.

5. Procédé selon l'une des revendications précédentes, comprenant en outre la formation d'un quotient de température de capteur et/ou d'un quotient de température de modèle avec un pas de temps prédéterminé.

6. Procédé selon l'une des revendications précédentes, dans lequel le capteur (22) est un capteur de particules.

7. Procédé selon l'une des revendications précédentes, dans lequel le moteur à combustion interne (10) est un moteur diesel, le procédé étant mis en œuvre dans le cadre d'un diagnostic embarqué du moteur diesel.

8. Dispositif (24) de surveillance d'un capteur (10) agencé dans une zone de gaz d'échappement d'un moteur à combustion interne (10), le dispositif comprenant un contrôleur, le contrôleur étant agencé pour mettre en œuvre le procédé selon l'une des revendications précédentes.

9. Programme informatique agencé pour mettre en œuvre chaque étape du procédé selon l'une des revendications 1 à 7.

10. Moyen de stockage électronique sur lequel est enregistré un programme d'ordinateur selon la revendication précédente.

11. Dispositif de commande électronique (24) comprenant un support de stockage électronique selon la revendication précédente.
